# EUROPEAN PATENT APPLICATION

(11) **EP 4 737 257 A1**
(43) Date of publication of application: **06.05.2026**
(21) Application number: 25211278.4
(22) Date of filing: 27.10.2025
(51) Int. Cl.: B61B 13/02, B61C 11/04, B65G 35/00, B60L 5/39, B60M 1/30

(54) **CONVEYOR**

(30) Priority: 30.10.2024 IT 202400024300
(71) Applicant: MES S.R.L., 86042 Campomarino (CB) (IT)
(72) Inventor: D'EGIDIO, Michele, Martinsville, NJ 08836 (US)
(74) Representative: Rausa, Mario Alberto Manlio

(57) **Abstract**

A conveyor (100) is described comprising: one or more conveyor tracks (105, 130) individually provided with at least one guide rail (200) extending along a predetermined path, and a plurality of carriages (110) which can be coupled to said guide rail (200) and adapted to run in succession along the path defined by it, wherein an electric motor (305) is installed on each carriage (110), adapted to drive the running of said carriage (110) along the guide rail (200) independently with respect to the running of the other carriages (110), and a wireless communication module (345), adapted to wirelessly connect said electric motor (305) to a remote electronic control unit (500) configured to control the operation of the electric motor (305).

## Description

### Technical field

The present invention falls in the field of industrial automation and relates, more specifically, to a conveyor, i.e., a device configured to transport objects along a predetermined path, for example but not necessarily to transfer them between two or more operating stations within a production, packaging or other process.

### State of the art

As is known, in the field of industrial automation, there are numerous types of conveyors. A typical example of a conveyor is what is known as the conveyor belt, which comprises a belt that is wound around a plurality of return rollers and is adapted to run in a loop path that has at least one upper operating section and a lower return section.

By placing objects on the upper operating section of the belt, it is therefore advantageously possible to make them advance from, for example, an entry position to an exit position.

Other conveyors that essentially exploit the same principle are belt or chain conveyors, which are sometimes used to drag object-carrying equipment which, remaining fixed to the belts or chains, are adapted to move in a closed circuit, transporting or otherwise advancing the objects to be handled.

A drawback of all these conveyors lies in their reduced flexibility of use, due to the fact that the transported objects can only advance or remain stationary all together.

This implies, for example, that where these conveyors are used to transport objects between two or more operating stations, should one of these operating stations stop or slow down, all the other operating stations would necessarily have to be stopped or slowed down as well, without any possibility of compensation, even temporarily.

### Disclosure of the invention

In light of the above, an aim of the present invention is to provide a conveyor with more flexible and versatile operation with respect to those of the prior art.

Another aim is to achieve the aforesaid objective in the context of a rational and low cost solution.

These and other objects are reached thanks to the features of the invention as set forth in the independent claim 1. The dependent claims outline preferred and/or particularly advantageous aspects of the invention but not strictly necessary for implementing it.

In particular, an embodiment of the present invention provides a conveyor comprising:
- one or more conveyor tracks individually equipped with at least one guide rail extending along a path, and
- a plurality of carriages which can be coupled to said guide rail and adapted to run in succession along the path defined by it,
wherein an electric motor is installed on each carriage, for example an alternating current motor (e.g., an asynchronous motor, preferably three-phase) or a direct current motor (e.g., a brushless motor), which is adapted to drive the running of said carriage along the guide rail independently with respect to the running of the other carriages, and a wireless communication module adapted to wirelessly connect said electric motor to a remote electronic control unit (e.g., a PLC) configured to control the operation of the electric motor.

Thanks to this solution, the conveyor is effectively able, by means of its carriages, to transport any type of object along the path defined by the guide rail.

Since the carriages are moved by respective electric motors, their movement is completely independent of each other, making transport extremely versatile and flexible.

For example, within certain limits, it is possible to stop, accelerate, decelerate or possibly even reverse the advancement direction of each carriage with respect to one or more of the other carriages.

It is thereby possible, for example, to create accumulation zones along the route in which the carriages approach each other, making it possible, for example, to compensate for variations in efficiency (e.g., production speed) between two operating stations arranged in succession along the route for a longer or shorter time.

Furthermore, it is advantageously possible to vary the pitch (i.e., the distance) separating each pair of consecutive carriages along the path, as well as possibly control synchronous or non-synchronous carriage advancement, i.e., it is possible to advance all the carriages together or it is possible to advance only some of them while leaving others stationary.

Thanks to the wireless connection to the remote electronic control unit, it is also advantageously possible to control the operation of the carriages efficiently, without the need for wired connection solutions which, in the context of electric motors mounted on movable carriages, would require the adoption of extremely complex and costly technical devices, and which are generally unsuitable for guaranteeing a sufficiently high quantity and speed of data transmission to manage several electric motors efficiently and simultaneously.

In this regard, it should be noted that the wireless communication module installed on each carriage can be a wireless module configured to connect to the remote electronic control unit through a computer network, such as a WLAN (Wireless Local Area Network), a WPAN (Wireless Personal Area Network), a WAN (Wide Area Network) or a BWA (Broadband Wireless Access), using an appropriate communication standard, such as IEEE 802.11, IEEE 802.15, IEEE 802.16, IEEE802.20, IEEE 802.22, ZigBee, M-Bus wireless, LoRa, Bluetooth or others.

The remote electronic control unit can then be configured to establish, for example based on appropriate programming, one or more of the following parameters: the activation instant of each electric motor, the deactivation instant of each electric motor, the direction of rotation of each electric motor (i.e., of the rotor with respect to the stator), the speed of rotation of each electric motor (i.e., of the rotor), the absolute or relative position (e.g., expressed as an angle with respect to a pre-set reference position, a number of revolutions or other) that each electric motor must assume (i.e., that the rotor must assume with respect to the stator), and the mechanical torque to be delivered by each electric motor. Through the wireless communication modules, the remote electronic control unit can finally be configured to give each electric motor the set parameters, i.e., to operate it in such a way as to comply with the set values of said parameters.

According to a preferred aspect of the invention, each wireless communication module can be integrated into the respective electric motor.

In other words, the wireless communication module can be combined with the electric motor to form a single object (stand-alone) that, although it can be disassembled, can be moved and operated as a whole or as a single component.

For example, the wireless communication module can be housed and/or fixed to an electric motor casing (or body), within which the rotor and stator are also generally housed.

According to another aspect of the invention, each conveyor track can comprise at least one rack extending parallel to the respective guide rail, and each electric motor can be adapted to rotate a pinion, which is installed on board the respective carriage and is adapted to engage with said rack.

Thanks to this solution, the movement of each carriage can be very precise and uniform.

Another aspect of the invention provides that each conveyor track can comprise two or more electrically conductive strips extending parallel to the respective guide rail, and that each electric motor can be (electrically) powered through two or more sliding contacts (brushes), each of which is installed on board the respective carriage and is adapted to be in contact with one of said electrically conductive strips.

It is thereby advantageously possible to transfer the electrical power required for their operation to the electric motors mounted on the movable carriages, without the use of wiring, which, in the specific type of application, would cause quite a few difficulties. According to an aspect of the invention, an electrical accumulator, preferably of a rechargeable type, e.g., an electric battery and/or capacitor (e.g., supercapacitor), can also be installed on board each carriage, which is adapted to store electrical energy and transfer said electrical energy to the respective electric motor.

This electrical accumulator could be connected with the sliding contacts, so as to receive from them and accumulate electrical energy when said sliding contacts are in contact with the electrically conductive strips, and with the electric motor, so as to transfer the accumulated electrical energy thereto, for example when the sliding contacts lose contact with said strips.

However, it cannot be ruled out that in other embodiments, the accumulator can completely replace the power supply by means of the sliding contacts and electrically conductive strips.

In cases such as this, the conveyor could comprise a charging system, preferably of the wireless type (e.g., capacitive or inductive), adapted to charge the accumulator when the charge level of the latter falls below a predefined threshold value.

Another aspect of the invention provides that each conveyor track, i.e., each guide rail or each assembly formed by the guide rail and possibly the respective rack and/or each respective electrically conductive strip, can be installed within a protective casing, which can be provided with a slot extending parallel to the respective guide rail and through which a portion of each carriage can protrude (e.g., substantially cantilevered) outside the protective casing.

Thereby, while the protruding portion of the carriages can be advantageously used to transport the objects that must be handled by the conveyor, the conveyor track and the main moving mechanical parts of the carriages, such as the electric motor and/or the pinion driven by it, can be enclosed within the protective casing, increasing safety.

The fact that the conveyor track and the main mechanical moving parts of the carriages are enclosed within the protective casing also has the advantage of increasing the cleanliness of the conveyor.

In fact, on the one hand, the conveyor track and mechanical parts are protected from dust and/or other external contaminants that, in prolonged use, could dirty them and worsen the operation thereof, thus requiring more frequent maintenance.

On the other hand, any dust produced by the operation of the conveyor, e.g., from wear and tear on the rail, sliding contacts or other mechanical parts, remains confined within the protective casing, making the conveyor also suitable for uses in clean rooms or other environments that require the maintenance of a high level of hygiene.

In this regard, it is preferable that the slot from which the protruding (e.g., cantilevered) portion of each carriage protrudes is very narrow and/or is made in a substantially vertical wall of the casing, in order to make it even more difficult for any contaminants to enter and/or exit.

It is also preferable that, on the outside of the protective casing, the conveyor is devoid of any element (e.g., guide rails or other supporting elements) adapted to be in contact with the protruding portion of the carriages, which can only be supported (cantilevered) by the guide rail and any other elements that are placed inside the protective casing. According to a preferred aspect of the invention, the conveyor can further comprise one or more transfer devices individually adapted to transfer each carriage from a first conveyor track to a second conveyor track and/or vice versa.

By switching them from one conveyor track to another, it is advantageously possible to increase the length of the route that can be travelled by the carriages.

In particular, said transfer devices can comprise a first transfer device adapted to transfer each carriage from the first conveyor track to the second conveyor track, and a second transfer device adapted to transfer each carriage from the second conveyor track to the first conveyor track.

Thereby, the carriages can be advantageously engaged to travel a closed-loop route.

In this and other contexts, the first and second conveyor tracks can be installed inside a single protective casing provided with two slots, each of which extends parallel to the guide rail of the first and second conveyor tracks, respectively, and through which a portion of each carriage can protrude (substantially cantilevered) outside said single protective casing.

Each of these two slots and the protruding portion of the carriages can naturally have the same features as outlined above.

Returning to the transfer devices, each of the transfer devices can comprise a support body carrying at least a first conveyor track section, i.e., a first section of a guide rail and possibly a respective rack and/or one or more respective electrically conductive strips, wherein said support body is movable between a first position, in which the first conveyor track section is aligned with the first conveyor track, and a second position, in which the first conveyor track section is aligned with the second conveyor track.

Thanks to this solution, when the support body is in the first or second position, one or more carriages can climb thereon and, by means of the subsequent rotation, pass from the first conveyor track to the second conveyor track and/or vice versa.

A preferred aspect of the invention is that the support body of each transfer device can also carry a second conveyor track section, i.e., a second section of a guide rail and possibly a respective rack and/or one or more respective electrically conductive strips.

When the support body is in the first position, said second conveyor track section can be aligned with the second conveyor track; when the support body is in the second position, said second conveyor track section can instead be aligned with the first conveyor track. Thereby, each time the support body is moved, the first and second conveyor track sections swap places, increasing the conveyor speed.

According to an aspect of the invention, each transfer device can comprise a protective casing integral with the support body, within which said first and second conveyor track sections are installed, said protective casing being provided with two slots, each of which extends parallel to the guide rail of a respective conveyor track section and through which a portion of each carriage can protrude (substantially cantilevered) outside the protective casing.

Thereby, the main moving parts of the carriages are protected even when they are in the transfer device.

Of course, each of these two slots and the protruding portion of the carriages can have the same features as outlined above.

Another aspect of the invention is that the support body of each transfer device can be movable between said first and second positions by rotating around a predetermined axis of rotation.

Thanks to this solution, the transfer of carriages between the first and second conveyor tracks and/or vice versa can be carried out relatively easily and quickly.

In particular, a preferred embodiment of the invention provides that the guide rails of the first and second conveyor tracks can be straight, horizontal and mutually parallel, e.g., mutually overlapping in a vertical direction, and that the axis of rotation of the support body of each transfer device can be parallel to the guide rails of said first and second conveyor tracks.

This results in a reliable, compact and relatively simple conveyor.

### Brief description of the drawings

Further features and advantages of the invention will be more apparent after reading the following description provided by way of a non-limiting example, with the aid of the figures illustrated in the accompanying drawings.
Figure 1 is a perspective view of a conveyor according to an embodiment of the present invention.
Figure 2 is a side view of the conveyor of Figure 1.
Figures 3 and 4 are views of Figures 1 and 2, respectively, in which some protective panels have been removed from the conveyor to show the underlying mechanical parts.
Figure 5 is the section V-V of Figure 2 shown on an enlarged scale.

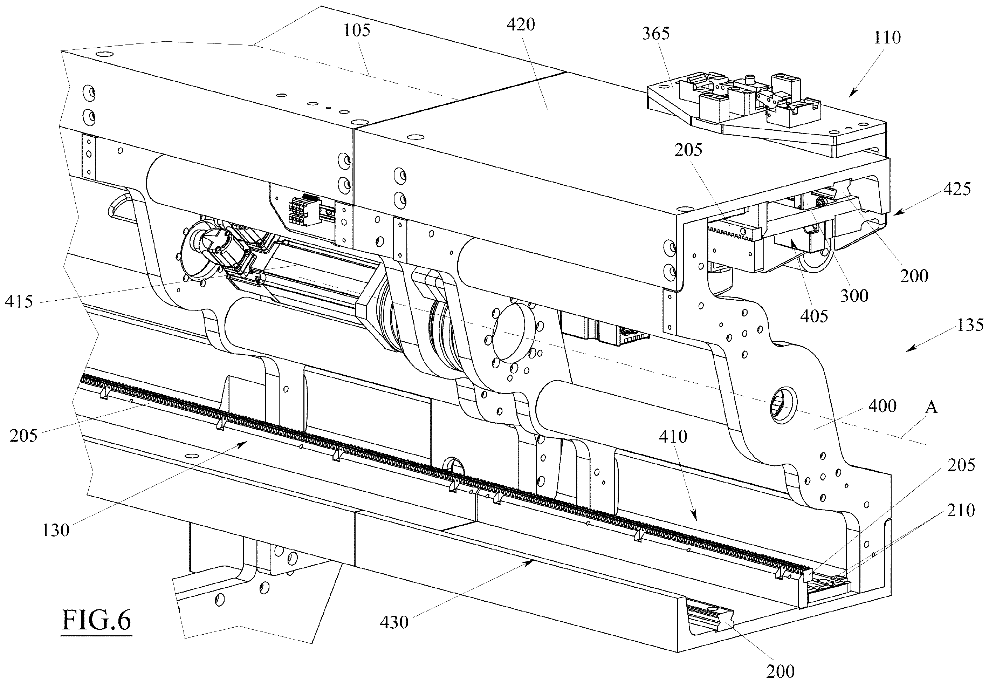

Figure 6 is an enlarged detail of Figure 3.
Figure 7 is a purely illustrative diagram of an electric motor of the type installed on the carriages of the conveyor of Figure 1.

### Detailed description

With the aid of the figures, a conveyor 100 is described that can be used, for example in the field of industrial automation, to transport objects of any type between two or more positions, e.g., but not necessarily to transfer them between two or more operating stations within a production, packaging or any other type of process.

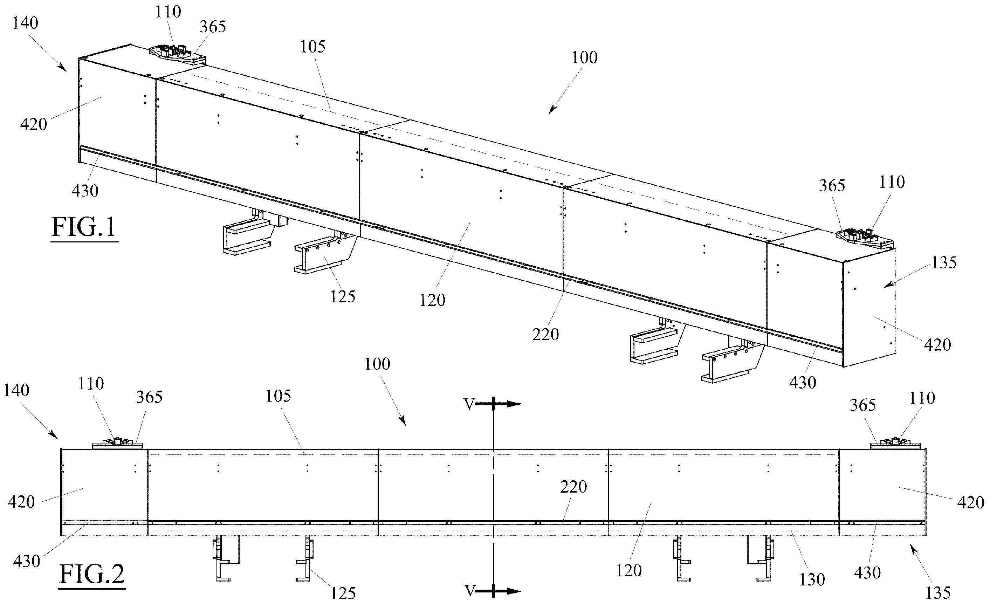

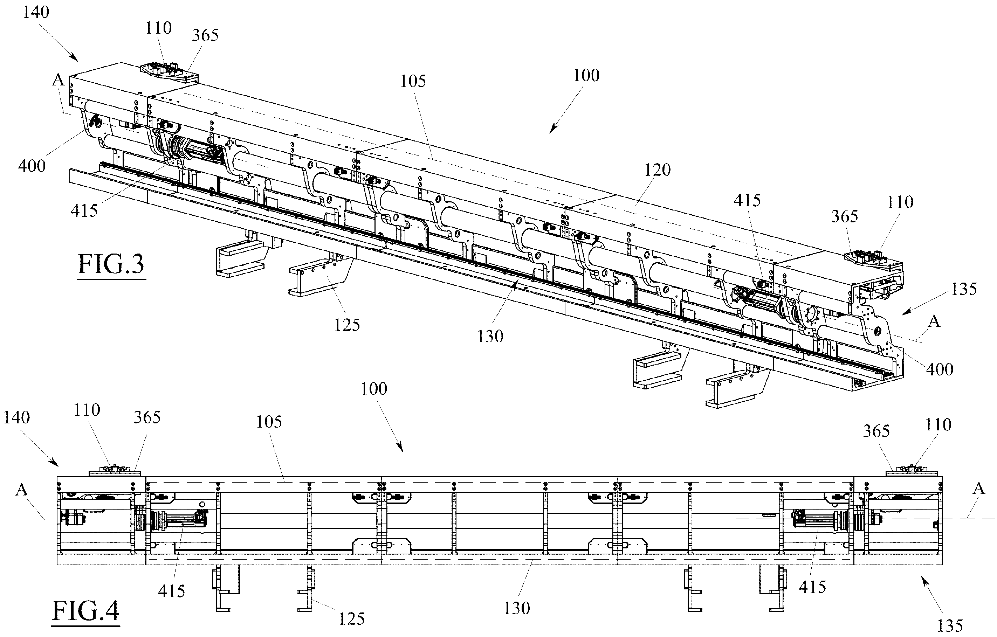

In general, the conveyor 100 comprises at least one conveyor track 105 (schematically indicated with a dashed line in Figures 1 to 4) and a plurality of carriages 110 adapted to move in succession along said conveyor track 105, i.e., along a path, e.g., but not necessarily a straight path, which is imposed on them by the conveyor track 105.

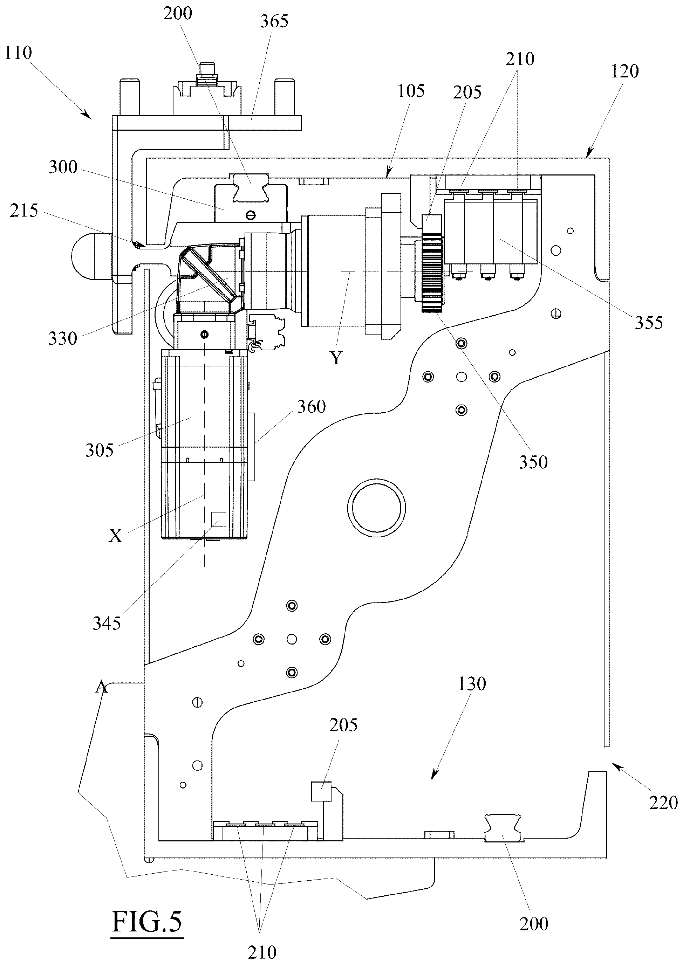

As can be seen in Figure 5, the conveyor track 105 can in fact comprise at least one (preferably only one) guide rail 200, for example but not necessarily straight, which extends along (and thus defines) the path imposed by conveyor track 105.

The carriages 110 can be slidably coupled to said guide rail 200, so as to be adapted to run in succession (in a row) along it and thus along the path defined by it.

For example, each carriage 110 can be provided with a runner block 300 adapted to form a shape coupling with said guide rail 200 that allows it to run along it but, for example, blocks it in all other directions.

In particular, the carriages 110 can be hung/suspended from the guide rail 200, i.e., the latter can be adapted to support the weight of the carriages 110 from above, and the shape coupling between the runner block 300 and the guide rail 200 can be such as to prevent the detachment thereof in a vertical direction.

In order to run along the guide rail 200, each carriage 110 can also be provided with a respective drive system, by means of which it can run independently of all the other carriages 110.

This drive system, which is installed on board the corresponding carriage 110, can comprise an electric motor 305.

The electric motor 305 can be an alternating current motor, e.g., an asynchronous motor, preferably three-phase, or direct current electric motor, e.g., a brushless motor.

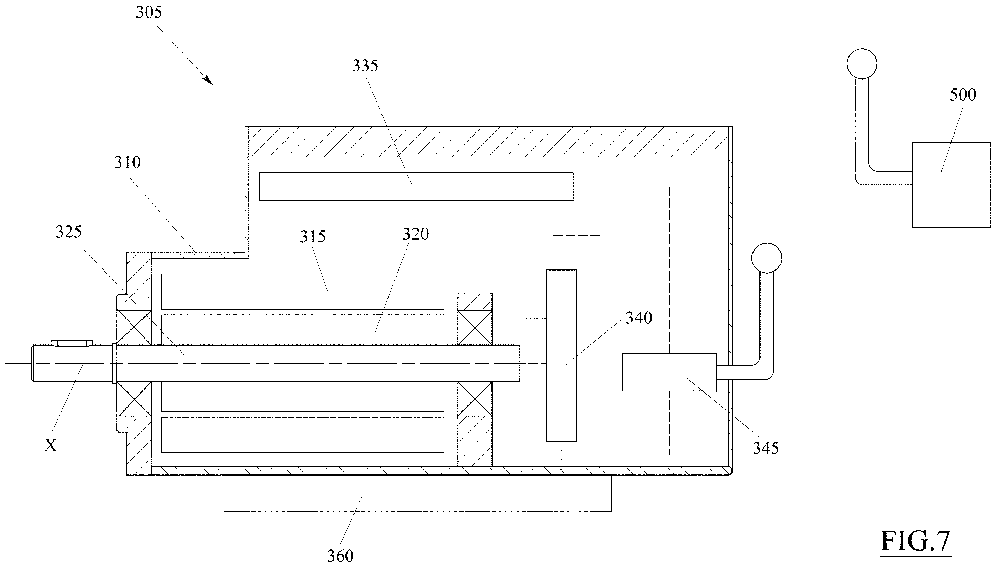

In any case, as illustrated in Figure 7 schematically and purely by way of explanation, the electric motor 305 can comprise an outer casing 310 (also referred to as the motor casing), a stator 315 of substantially annular shape housed and fixed inside the casing 310, and a rotor 320 rotatably supported inside the stator 315, so as to be able to rotate about a pre-set axis of rotation X, transforming electrical energy supplied to the motor into mechanical energy.

To enable this mechanical energy to be utilised, the electric motor 305 can be provided with a drive shaft 325, which is dragged in rotation by the rotor 320 and can protrude outside the casing 310.

In some embodiments, such as the one schematically illustrated in Figure 7, the drive shaft 325 can be coaxially and directly keyed to the rotor 320.

In other embodiments, such as that illustrated in Figure 5, the motor shaft 325 can be kinematically connected to the rotor 320 through transmission members 330 (e.g., gear reducers, screw-nut screw systems, etc.) which, possibly, are also adapted to incline the axis of rotation Y of the motor shaft 325 with respect to the axis of rotation X of the rotor 320.

These transmission members 330 can be integrated into the electric motor 305, e.g., housed in the outer casing 310 or associated with a casing externally fixed to the same, so as to form a single stand-alone object (e.g., gearmotor).

If the electric motor 305 is of the brushless type, permanent magnets can be installed on the rotor 320, while electric windings can be placed on the stator 315, which, when an electric current is passed through them, are adapted to generate a magnetic field.

In order for the rotor 320 of the brushless motor to rotate, it may be necessary to cyclically reverse the direction of the electric current flowing through the stator windings and thus the rotation of the magnetic field induced by them.

For this reason, the electric motor 305 can be associated with an electronic controller 335, e.g., from a microcontroller installed on a special board, which is configured to perform the aforesaid inversion, e.g., by switching appropriate electrical switches.

In some embodiments, the electronic controller 335 can be integrated (comprised) in the electric motor 305, e.g., fixed inside or outside the housing 310, forming a single stand-alone device.

In association with the electronic controller 335, the electric motor 305 can also comprise a heat sink (not illustrated), e.g., a block of thermally conductive material, exposed to the external environment and in a heat exchange relationship with the electronic controller 335, the function of which is to improve the dissipation of the heat generated by the electronic controller 335 itself.

In order to correctly reverse the current on the stator windings, the electronic controller 335 may need to know the position of the rotor 320 with respect to the stator 315.

For this reason, an encoder 340, e.g., an SSI absolute magnetic encoder, can also be associated with the electric motor 305, which is connected to the electronic controller 335 and is used to monitor the position of the rotor 320 with respect to the stator 315.

The encoder 340 can also be integrated (comprised) in the electric motor 305, e.g., rigidly fixed inside the casing 310, so as to form a single stand-alone device.

In addition to the electric motor 305, the drive system of each carriage 110 can comprise a wireless communication (i.e., data exchange) module 345, adapted to establish a wireless communication channel between the electric motor 305, for example between its electronic controller 335, and an remote electronic control unit 500.

For example, the wireless communication module 345 can be configured to connect to the electronic control unit 500 through a computer network, such as a WLAN (Wireless Local Area Network), a WPAN (Wireless Personal Area Network), a WAN (Wide Area Network) or a BWA (Broadband Wireless Access), using an appropriate communication standard, such as IEEE 802.11, IEEE 802.15, IEEE 802.16, IEEE 802.20, IEEE 802.22, ZigBee, wireless M-Bus, LoRa, Bluetooth or others.

In any case, the communication network can be exclusive, i.e., the wireless communication module 345 of each carriage 110 can only be connected to the electronic control unit 500 and not, for example, to the wireless communication modules 345 of the other carriages 110.

As schematically illustrated in Figure 7, the wireless communication module 345 of each carriage 110 is preferably integrated into the corresponding electric motor 305, forming a single stand-alone device.

For example, the wireless communication module 345 can be rigidly fixed inside and/or outside the casing 310.

As for the remote electronic control unit 500, it can comprise or consist of any electronic device, preferably programmable, which is configured/programmed to control the operation of the conveyor 100, or of the electric motor 305 of each carriage 110, preferably independently of the others.

For example, the remote electronic control unit 500 can be or comprise a PLC (Programmable Logic Controller).

By way of non-limiting example, for each carriage 110, the remote electronic control unit 500 can be configured to establish, for example based on the functions to be performed by the conveyor 100, one or more of (or all of) the following parameters: the activation instant of the electric motor 305 (i.e., the instant at which the rotor 320 begins to rotate), the deactivation instant of the electric motor 305 (i.e., the instant at which the rotor 320 stops), the direction of rotation of the electric motor 305 (i.e., the direction of rotation of the rotor 320 with respect to the stator 315), the speed of rotation of the electric motor 305 (i.e., the speed of rotation of the rotor 320), the absolute or relative position of the electric motor 305 (i.e., the absolute or relative position - e.g., expressed as an angle with respect to a predetermined reference position, number of revolutions, or otherwise - to be occupied by the rotor 320 with respect to the stator 315), and the mechanical torque to be delivered by the electric motor 305 (i.e., to be applied to the rotor 320 by the electromagnetic fields generated at the stator 315).

Through the wireless communication module 345, the remote electronic control unit 500 can also be configured to transmit the aforesaid parameters to the electric motor 305 of the corresponding carriage 110 (e.g., to the electronic controller 335 or other motor controller), so as to force said electric motor 305 to operate according to the received parameters.

For example, in the case of a brushless motor, the remote electronic control unit 500 can be configured to transmit said parameters to the electronic controller 335, which can in turn be configured to command the electric motor 305 to operate according to the received parameters.

In the same way, the remote electronic control unit 500 can also be configured to manage the reference position reset, i.e., to set the relative reference position between the rotor 320 and the stator 315 of each electric motor 305.

For example, when the rotor 320 is in a given position with respect to the stator 315, the remote electronic control unit 500 can set that position as the reference position.

To perform these and/or other functions, the remote electronic control unit 500 can also be configured to receive from each electric motor 305, through the respective wireless communication module 345, the measured values of one or more of the following parameters: instantaneous motor (i.e., rotor 320) speed, instantaneous absolute or relative motor (i.e., rotor 320) position, motor current consumption, motor supply voltage, motor status and related alarms, and operating mode.

Ultimately, thanks to the wireless communication module 345, any necessary digital communication between the electric motors 305 of the carriages 110 and the remote electronic control unit 500, for the exchange of instructions and/or information, can advantageously take place wirelessly, i.e., without the need for any physical wiring between the aforementioned components.

A coordinating electronic device (not illustrated), which is configured to control the wireless network, can be functionally interposed between the remote electronic control unit 500 and the wireless communication modules 345 of one or more (or all) of the carriages 110.

In particular, the coordinating device, which in some embodiments can be directly integrated into the remote electronic control unit 500, can be configured to simultaneously control a plurality of electric motors 305 of a plurality of carriages 110.

The commissioning of the electric motors 305 (e.g., network set-up and electric motor association) can be implemented from a customised web server on the gateway itself to speed up development and avoid involving the remote electronic control unit 500.

Returning to the actuation system of each carriage 110, it can further comprise a traction member, which is kinematically connected to the respective electric motor 305 (e.g., to its drive shaft 325), and is adapted to transform the mechanical energy generated by said electric motor 305 into a running of the carriage 110 along the guide rail 200.

In the embodiment illustrated here (see Fig. 5), the traction member is a toothed pinion (or toothed wheel) 350.

In addition to the guide rail 200, the conveyor track 105 can thus possibly also comprise a rack 205, which extends parallel to the guide rail 200, preferably alongside the latter and/or preferably for the entire longitudinal extension (i.e., the entire length) thereof.

The toothed pinion 350 of each carriage 110 is adapted to mesh (or stay meshed) with said rack 205, which is fixed with respect to the guide rail 200, so that the rotation of the toothed pinion 350, driven by the corresponding electric motor 305, causes the carriage 110 to move along the guide rail 200.

The conveyor track 105 can further optionally comprise, in addition to the guide rail 200 and the rack 205, if any, at least one pair of electrically conductive strips 210 (but there could be at least three), each extending parallel to the guide rail 200, preferably side-by-side with the latter and/or preferably for the entire longitudinal extension thereof.

Each of these electrically conductive strips 210, which are fixed with respect to the guide rail 200, can be referred to a different electrical potential from that to which the other electrically conductive strips 210 are referred.

For example, an electrically conductive strip 210 can be referred to a reference potential (e.g., ground) while another electrically conductive strip 210 can be referred to a higher potential.

This electrical potential difference (i.e., electrical voltage), which can be obtained by connection to a generator or an electrical network, can advantageously be used to provide the electrical energy required to operate the carriages 110.

In fact, two or more electrical sliding contacts (brushes) 355 can be installed on board each carriage 110, each of which is adapted to be in contact with a respective electrically conductive strip 210.

These sliding electrical contacts 355 can then be connected to the electric motor 305 mounted on the carriage 110, so that the voltage difference applied between the electrically conductive strips 210 can generate an electric current useful to supply at least the electric motor 305.

The sliding contacts 355 can be made of carbon or an alloy of carbon, copper and/or tin, e.g., an alloy of carbon and bronze, in order to be less susceptible to wear and to be able to carry higher electric currents (amps).

Through the sliding contacts 355, the voltage difference applied between the electrically conductive strips 210 can possibly also power one or more of (or all of) the other electrical/electronic loads mounted on the corresponding carriage 110, for example the wireless communication module 345 and/or the electronic controller 335 and/or the encoder 340. It should be noted that the supply voltage of the carriages 110, i.e., the voltage difference imposed between the electrically conductive strips 210, is preferably a low voltage.

For example, the supply voltage of the carriages 110 can be less than or equal to 90 V (volts), preferably less than or equal to 60 V and/or between 12 V and 60 V, e.g., equal to 24 V or 48 V.

Thereby, conveyor 100 is electrically safer and, for this reason, does not have to comply with the strict regulations that often govern high-voltage devices.

In order to power the electric motor 305 and possibly the other electrical loads mentioned above, it is envisaged that an electrical accumulator 360, preferably of a rechargeable type, e.g., an electric battery and/or capacitor (e.g., supercapacitor), can also be installed on board each carriage 110, which is adapted to store electrical energy and subsequently transfer it to the respective electrical loads.

In particular, this accumulator 360 (e.g., supercapacitor) can be connected with the sliding contacts 355, so as to receive therefrom and accumulate electrical energy, when said sliding contacts 355 are in contact with the electrically conductive strips 210, and can be connected with the electric motor 305 and any other electrical loads of the carriage 110, so as to transfer the accumulated electrical energy thereto, for example, when the sliding contacts 355 lose contact with the electrically conductive strips 210.

However, it cannot be ruled out that, in other embodiments, the electric accumulator 360 could completely replace the sliding contacts 355 and the electrically conductive strips 210 (which could then be absent), being the sole source of power for the electric motor 305 and any other electrical loads on the carriage 110.

In cases such as this, the conveyor 100 could comprise a charging system, preferably of the wireless type (e.g., capacitive or inductive), adapted to charge the accumulator 360 when the charge level of the latter falls below a predefined threshold value.

This charging system could be located at a precise position along the path defined by the conveyor track 105, where each carriage 110 could stop periodically to allow its respective electric accumulator 360 to charge.

Summarising and generalising the foregoing, the conveyor track 105 can thus comprise at least one guide rail 200, or an assembly comprising at least one guide rail 200 and at least one rack 205 and/or at least one pair of electrically conductive strips 210 (as described and detailed above).

The conveyor track 105 (so understood) can be installed within a protective casing 120, which is preferably provided with an internal stiffening/reinforcement frame and/or removable or openable panels for inspection and/or maintenance.

This protective casing 120 can have a substantially tubular shape, e.g., rectangular in cross-section, and can extend parallel to the conveyor track 105 (i.e., rail 200).

The protective casing 120 can generally be provided with a slot 215, which extends parallel to the respective guide rail 200 of the conveyor track 105 and through which a portion of each carriage 110, of those which are slidably coupled to said guide rail 200, can protrude outside the protective casing 120.

In practice, each of the carriages 110 that are coupled (preferably hanging) to the guide rail 200 can have an inner portion, which remains contained within the protective casing 120, a connecting portion, which passes through the slot 215, and an outer or protruding (e.g., cantilevered) portion, which remains located outside the protective casing 120 and is joined to the inner portion by means of the connecting portion.

Preferably, the slot 215 is very narrow (e.g., width less than or equal to 20 cm or even less than or equal to 15 cm).

The slot 215 can preferably be made in a substantially vertical wall of the protective casing 120, such that the outer portion of each carriage 110 protrudes substantially cantilevered with respect to the protective casing 120.

It is also preferable that, on the outside of the protective casing 120, the conveyor 100 is devoid of any element (e.g., guides or other supporting elements) adapted to be in contact with the outer portion of the carriages 110, which can only be supported (preferably suspended) by the guide rail 200 and any other elements that are placed inside.

The electric motor 305, the toothed pinion 350 (or other traction device), if any, the sliding contacts 355, the wireless communication module 345 and generally other (e.g., all other) possible components of the drive system can be installed on the inner portion of each carriage 110.

Instead, the outer or protruding (e.g., cantilevered) portion of each carriage 110 can be configured or equipped to house and/or carry objects to be transported by the conveyor 100.

For example, the outer portion of each carriage 110 can be equipped with a platform 365, placed, for example, on the vertical of the guide rail 200, adapted to restingly (directly or indirectly) support the objects that must be transported.

Possibly, the outer or protruding portion of each carriage 110, e.g., the platform 365, can also carry tools or other devices (not illustrated) adapted to perform special operations, e.g., to perform operations on the transported objects.

These tools and/or devices can be driven by electric motors which, in turn, can be powered by the same system that powers the electric motor 305 of the corresponding carriage 110.

The conveyor track 105 and/or the relative protective casing 120 can then be permanently fixed to the ground, e.g., directly to a floor or possibly to a suitable support structure 125 that keeps them raised from the floor.

The path defined by conveyor track 105, i.e., the respective guide rail 200, represents the route or a section of the route that the carriages 110 travel on the conveyor 100.

This route can be open or, more preferably, closed, so that the carriages 110 can repeatedly pass through the same positions without reversing their travel direction.

Preferably, but not necessarily, the route can be defined by a plurality of conveyor tracks, having, for example, the same features as the conveyor track 105 outlined above, which are adapted to be travelled in succession (or sequence or one after the other) by the carriages 110.

Each of these conveyor tracks can thus consist of at least one guide rail 200 and possibly at least one rack 205 and/or at least one pair of (or possibly at least one set of three) electrically conductive strips 210.

Furthermore, the guide rail 200, as well as the rack 205, if any, and the pair of (or set of three) electrically conductive strips 210, if any, of each conveyor track are preferably homologous to those of all the other conveyor tracks of the conveyor 100.

Homologous means, for example, that the guide rail 200, the rack 205, if any, and the electrically conductive strips 210, if any, of each conveyor track are the same as the guide rail 200, the rack 205, if any, and the electrically conductive strips 210, if any, of all other conveyor tracks, possibly minus their longitudinal extension, i.e., their length and/or the shape of the path defined by them (which could change).

In particular, the above-mentioned plurality of conveyor tracks can comprise at least two conveyor tracks, of which the conveyor track 105 and at least a second conveyor track 130.

Preferably but not necessarily, the conveyor track 105 and the second conveyor track 130 (i.e., their guide rails 200) can both be straight and/or horizontal.

In particular, the conveyor track 105 and the second conveyor track 130 (i.e., their guide rails 200) can be mutually parallel (and spaced), e.g., mutually overlapping in the vertical direction.

Thereby, the carriages 110 can be slidably hanging on the guide rail 200 of the second (upper) conveyor track 110, while they will be slidably resting on the guide rail 200 of the second (lower) conveyor track 130.

The conveyor track 105 and the second conveyor track 130 can also be installed within the same protective casing 120, which can thus also be provided with a second slot 220, which extends parallel to the guide rail 200 of the second conveyor track 130 and through which a portion of each carriage 110, of those which are slidably coupled to said guide rail 200, can protrude outside of said protective casing 120.

Of course, the second slot 220 and the protruding portion of the carriages can have the same features as outlined above.

In order to transfer each carriage 110 from one conveyor track to another along the route, for example from the conveyor track 105 to the second conveyor track 130, the conveyor 100 can further generally comprise at least one transfer device 135.

In particular, the transfer device 135 can be placed at a terminal end of the conveyor track 105 where, for example, it can be adapted to transfer one or more carriages 110 from the conveyor track 105 to the second conveyor track 130, for example at an initial end of the second conveyor track 130, and/or vice versa.

This transfer device 135 can in particular comprise a support body 400 on which at least one conveyor track section 405 is installed.

'Conveyor track section' does not mean anything other than a conveyor track as described above.

A 'conveyor track section' is thus formed by at least one guide rail 200 or an assembly formed by at least one guide rail 200 and at least one respective rack 205 and/or at least one pair of (or set of three) electrically conductive strips 210 parallel to the guide rail 200. The wording 'conveyor track section' was only used to linguistically distinguish a conveyor track mounted on the support body 400 of the transfer device 135 from the other conveyor tracks of the conveyor 100.

A possible but not necessary difference between a 'conveyor track section' and a 'conveyor track' can be the fact that, while the longitudinal extension of a 'conveyor track', for example of the conveyor track 105 and/or the second conveyor track 130, (i.e., of the respective guide rail 200) is generally sufficiently long to house a plurality of carriages 110 at a time, a 'conveyor track section', for example the conveyor track section 405, (i.e., its guide rail 200) can be shorter, for example having a length sufficient to house only one carriage 110 at a time.

Preferably but not necessarily, the conveyor track section 405 (i.e., its guide rail 200) is straight, e.g., parallel to the conveyor track 105 and to the second conveyor track 130 (i.e., their guide rails 200).

The support body 400 of the transfer device 135 is generically movable between a first position (illustrated in the figures), in which the conveyor track section 405 is aligned with the conveyor track 105, and a second position (not illustrated), in which said conveyor track section 405 is aligned with the second conveyor track 130.

By aligned, it is meant that the guide rail 200 and, if present, the rack 205 and/or the pair of (or set of three) electrically conductive strips 210 of the conveyor track section 405 are aligned respectively with the guide rail 200, and, if present, the rack 205 and/or the pair of (or set of three) electrically conductive strips 210, of the conveyor track 105, so as to allow the carriages 110 to pass from one to the other and/or vice versa.

It is thereby possible, for example, that when the support body 400 is in the first position (illustrated), a carriage 110 can run on the conveyor track 105 until it climbs onto the conveyor track section 405 of the transfer device 135, after which the support body 400 can move and bring itself to the second position, where that same carriage 110, which had climbed onto the conveyor track section 405 of the transfer device 135, can run and climb onto the second conveyor track 130.

A reverse transfer could of course also take place in the same way.

To increase the speed and efficiency of the conveyor 100, it is however preferable that the transfer device 135 also comprises a second conveyor track section 410. Preferably but not necessarily, this second conveyor track section 410 (i.e., its guide rail 200) is straight, e.g., to the conveyor track section 405 (i.e., its guide rail 200).

When the support body 400 is in the first position (illustrated), the second conveyor track section 410 can be aligned with the second conveyor track 130, while when the support body 400 is in the second position, said second conveyor track section 410 can be aligned with the conveyor track 105.

In practice, by moving the support body 400 from the first to the second position and/or vice versa, the conveyor track section 405 and the second conveyor track section 410 switch places.

Thereby, for example, while a carriage 110 climbs onto the transfer device coming from the conveyor track 105, another carriage 110 can simultaneously descend from the transfer device 135 towards the second conveyor track 130 and/or vice versa.

In any case, in order to pass from the first to the second position, the support body 400 of the transfer device 135 can be adapted to rotate about a fixed pre-set axis of rotation A, which can be parallel (and spaced apart) with respect to the conveyor track 105 (i.e., its guide rail 200) and, if present, also parallel (and spaced apart) with respect to the second conveyor track 130 (i.e., its guide rail 200).

The movement (e.g., rotation) of the support body 400 between the first and second position can be driven by a motor 415, e.g., an electric motor.

The transfer device 135 can further comprise a protective casing 420, integral with the support body 400 and preferably provided with removable or openable panels for inspection and/or maintenance, within which the conveyor track section 405 and, if present, also the second conveyor track section 410 is installed.

This protective casing 420 can then be provided with a slot 425 extending parallel to the guide rail 200 of the conveyor track section 405 and through which a portion of each carriage 110, which is slidably coupled to said guide rail 200, can protrude outside the protective casing 420.

If the second conveyor track section 410 is also present, the protective casing 420 can also comprise a second slot 430 extending parallel to the guide rail 200 of the second conveyor track section 410 and through which a portion of each carriage 110, which is slidably coupled to said guide rail 200, can protrude outside the protective casing 420.

Of course, each of these slots 425 and/or 430 and the protruding portion of the carriages 110 can have the same features as outlined above.

The conveyor 100 can further comprise at least a second transfer device 140 adapted to transfer the carriages 110 between the conveyor track 105 and the second conveyor track 130.

This second transfer device 140 can have the same features as the transfer device 135 described above, to which reference is made for further details.

The second transfer device 140 can, for example, be placed at one terminal end of the second conveyor track 130, opposite the initial end at which the transfer device 135 is positioned.

The second transfer device 140 can therefore be adapted to transfer one or more carriages 110 from the second conveyor track 130 to the conveyor track 105, for example at an initial end of the conveyor track 105 opposite to that at which the transfer device 135 is placed.

Thereby, the two conveyor tracks 105 and 130 and the two transfer devices 135 and 140 are advantageously able to engage the carriages 110 in a closed route.

From what has been described and illustrated above, the operation of the conveyor 100 is evident.

Briefly, the remote electronic control unit 500 can be configured to engage the carriages 110 to run along the (preferably closed) path defined by the conveyor tracks, e.g., the conveyor tracks 105 and 130, and the transfer devices, e.g., the transfer devices 135 and 140.

In particular, the remote electronic control unit 500 can be configured to make the carriages 110 run independently of each other, thus being able to vary the pitch (i.e., the distance) separating each pair of consecutive carriages 110, as well as possibly controlling a synchronous or non-synchronous running of the carriages 110, i.e., running all the carriages 110 at the same time or running only some of them while leaving others stationary.

Along the section of the route (i.e., along the path) defined at least by the conveyor track 105, the carriages 110 are capable, for example by means of their platforms 365 which remain outside the protective casing 120, of receiving and transporting objects.

For example, each carriage 110 can receive one or more objects at its initial end to transport it/them towards the final end, where this/these object(s) can be picked up.

After that, through the transfer device 135, the carriage 110 can be transferred to the second conveyor track 130.

By travelling backwards along the second conveyor track 130 (with respect to the advancement direction it had on the conveyor track 105), the carriage 110 can then reach the second transfer device 140, which transfers it back to the conveyor track 105 to repeat the cycle.

Obviously, a person skilled in the art can make numerous modifications of a technical application nature to everything described, without thereby departing from the scope of the invention as claimed below.

## Claims

1. A conveyor (100) comprising:
- one or more conveyor tracks (105, 130) individually equipped with at least one guide rail (200) extending along a predetermined path, and
- a plurality of carriages (110) which can be coupled to said guide rail (200) and adapted to run in succession along the path defined by it,
wherein an electric motor (305) is installed on each carriage (110) adapted to drive the running of said carriage (110) along the guide rail (200) independently with respect to the running of the other carriages (110), and a wireless communication module (345) adapted to wirelessly connect said electric motor (305) to a remote electronic control unit (500) configured to control the operation of the electric motor (305).

2. A conveyor (100) according to claim 1, wherein each wireless communication module (345) is integrated into the respective electric motor (305).

3. A conveyor (100) according to claim 1 or 2, wherein each conveyor track (105, 130) comprises at least one rack (205) extending parallel to the respective guide rail (200), and wherein each electric motor (305) is adapted to rotate a pinion (350), which is installed on board the respective carriage (110) and is adapted to engage with said rack (205).

4. A conveyor (100) according to any one of the preceding claims, wherein each conveyor track (105, 130) comprises two or more electrically conductive strips (210) extending parallel to the respective guide rail (200), and wherein each electric motor (305) is powered through two or more sliding contacts (355), each of which is installed on board the respective carriage (110) and is adapted to be in contact with one of said electrically conductive strips (210).

5. A conveyor (100) according to any one of the preceding claims, wherein an electrical accumulator (360) is installed on board each carriage (110) adapted to store electrical energy and transfer said electrical energy to the respective electric motor (305).

6. A conveyor (100) according to any one of the preceding claims, wherein each conveyor track (105, 130) is installed within a protective casing (120), which is provided with a slot (215, 220) extending parallel to the respective guide rail (200) and through which a portion of each carriage (110) may protrude outside the protective casing (120).

7. A conveyor (100) according to any one of the preceding claims, comprising one or more transfer devices (135, 140) individually adapted to transfer each carriage (110) from a first conveyor track (105) to a second conveyor track (130) and/or vice versa.

8. A conveyor (100) according to claim 7, wherein said transfer devices (135, 140) comprise a first transfer device (135) adapted to transfer each carriage (110) from the first conveyor track (105) to the second conveyor track (130), and a second transfer device (140) adapted to transfer each carriage from the second conveyor track (130) to the first conveyor track (105).

9. A conveyor (100) according to claim 8, wherein said first and second conveyor tracks (105, 130) are installed inside a single protective casing (120) provided with two slots (215, 220), each of which extends parallel to the guide rail (200) of the first and second conveyor tracks (105, 130) respectively, and through which a portion of each carriage (110) can protrude outside said single protective casing (120).

10. A conveyor (100) according to any one of claims 7 to 9, wherein each of the transfer devices (135, 140) comprises a support body (400) carrying at least a first conveyor track section (405), and wherein said support body (400) is movable between a first position in which the first conveyor track section (405) is aligned with the first conveyor track (105), and a second position, in which the first conveyor track section (405) is aligned with the second conveyor track (130).

11. A conveyor (100) according to claim 10, wherein the support body (400) of each transfer device (135, 140) also carries a second conveyor track section (410), wherein when the support body (400) is in the first position, said second conveyor track section (410) is aligned with the second conveyor track (130), and wherein when the support body (400) is in the second position, said second conveyor track section (410) is aligned with the first conveyor track (105).

12. A conveyor (100) according to claim 11, wherein each transfer device (135, 140) comprises a protective casing (420) integral with the support body (400), within which said first and second conveyor track sections (405, 410) are installed, and wherein said protective casing (420) is provided with two slots (425, 430), each of which extends parallel to the guide rail (200) of a respective conveyor track section (405, 410) and through which a portion of each carriage (110) can protrude outside the protective casing (420).

13. A conveyor (100) according to any one of claims 10 to 12, wherein said support body (400) is movable between said first and second positions by rotating about a predetermined axis of rotation.

14. A conveyor (100) according to claim 13, wherein the guide rails (200) of the first and second conveyor tracks (105, 130) are straight, horizontal and mutually parallel, and wherein the axis of rotation of the support body (400) is parallel to the guide rails (200) of said first and second conveyor tracks (105, 130).

15. A conveyor (100) according to claim 14, wherein the guide rails (200) of the first and second conveyor tracks (105, 130) are mutually overlapping in a vertical direction.
